**Europäisches Patentamt**

**European Patent Office**

**Office européen des brevets**

(19)

(11) Veröffentlichungsnummer : **0 267 154 B2**

(12) ## NEUE EUROPÄISCHE PATENTSCHRIFT

(45) Veröffentlichungstag der neuen Patentschrift :
**11.05.94 Patentblatt 94/19**

(51) Int. Cl.$^5$ : **C03C 8/04,** C03C 3/089

(21) Anmeldenummer : **87810619.4**

(22) Anmeldetag : **29.10.87**

(54) **Bleifreie Glasfrittenzusammensetzungen.**

Die Akte enthält technische Angaben, die nach
dem Eingang der Anmeldung eingereicht
wurden und die nicht in dieser Patentschrift
enthalten sind.

(30) Priorität : **03.11.86 US 926072**

(43) Veröffentlichungstag der Anmeldung :
**11.05.88 Patentblatt 88/19**

(45) Bekanntmachung des Hinweises auf die
Patenterteilung :
**17.04.91 Patentblatt 91/16**

(45) Bekanntmachung des Hinweises auf die
Entscheidung über den Einspruch :
**11.05.94 Patentblatt 94/19**

(84) Benannte Vertragsstaaten :
**CH DE ES FR GB IT LI NL**

(56) Entgegenhaltungen :
**GB-A- 768 925
GB-A- 1 013 597
GB-A- 2 092 123
JP-A-56 155 040
JP-A-60 186 438
US-A- 4 312 951
US-A- 4 417 913**

(73) Patentinhaber : **CIBA-GEIGY AG
Klybeckstrasse 141
CH-4002 Basel (CH)**

(72) Erfinder : **Klimas, David A.
2169 Morning Wind Circle Bridgeville
Pennsylvania 15017 (US)**
Erfinder : **Frazee, Boyd R.
154 Dewey Avenue Washington
Pennsylvania 15301 (US)**

EP 0 267 154 B2

Jouve, 18, rue Saint-Denis, 75001 PARIS

**Beschreibung**

Dekorüberzugsmassen werden im allgemeinen in zwei Kategorien eingeteilt: Glasuren und Emails. Glasuren bestehen gewöhnlich aus klarem Glas, während Emails Glasuren sind, die färbende Materialien, wie Pigmente enthalten. Glasuren und Emails werden in der Praxis in feinverteilter Form, der sogenannten "Glasfritte" eingesetzt, die selektiv, aufgrund des vorgesehenen Dekorationsmusters, auf die Oberfläche der Glas-, Glas-Keramik-, Prozellan- oder Keramikware aufgetragen wird. Verschiedene Verfahrensweisen sind bekannt, die zu diesen Ergebnissen führen, Normalerweise liegt die Glasfritte in Form einer Paste vor, die aus der feinverteilten Form der Glasur oder des Emails und einem Träger besteht. Nach dem Auftragen der Ueberzugsmasse auf der Ware mittels Siebschablone oder anderer Verfahren, wird die Ware zur Verflüchtigung des Trägers und zum Verschmelzen der Fritte, d.h. der Verzierung, mit der Oberfläche des zu verzierenden Gegenstandes gebrannt.

Eine ganze Reihe von Dekorüberzugsmassen für die Verzierung von Glas-, Porzellan- und Keramikware ist erhältlich. Sehr oft enthalten diese Produkte Blei- und/oder Cadmiumoxide. Bleioxid wurde früher eingesetzt, um den Erweichungsprunkt der Fritte zu erniedrigen, damit die Fritte bei so tiefen Temperaturen wie nur möglich in die Oberfläche der Ware eingebrannt werden konnte, um eine thermische Verformung der Gegenstände zu vermeiden. Cadmiumoxid wurde in früheren Zeiten als Farbkörper in bestimmten Glasfritten eingesetzt. Ungünstige toxikologische Auswirkungen dieser Substanzen haben inzwischen zum Verbot der Verwendung von Blei- und Cadmiumverbindungen in Dekorüberzugsmassen geführt. Es stellte sich deshalb die Aufgabe, neue Glasfrittenzusammensetzungen mit gleichen oder verbesserten Eigenschaften bereitzustellen, die keine Blei-bzw. Cadmiumkomponenten enthalten.

Eine Anzahl von bleifreien Produkten dieser Art sind in der Literatur bereits vorgeschlagen worden. Die US-A-4 376 169 beschreibt Glasfritten, in denen ein Alkalioxid, $B_2O_3$, $Al_3O_3$, $SiO_2$, F, $P_2O_5$, ZnO und $TiO_2$ in einem bestimmten Verhältnis vorhanden sein müssen. Blei-, cadmium- und zinkfreie Glasfrittenzusammensetzungen enthaltend $Li_2O$, $B_2O_3$, $SiO_2$ und andere Oxide sind in der US-A-4 446 241 offenbart. Die US-A-4 537 862 beschreibt Fritten, die $B_2O_3$, $SiO_2$, $ZrO_2$ und Seltenerdmetalloxide enthalten, wobei das Verhältnis zwischen $ZrO_2$ und Seltenerdmetalloxiden kritisch ist. Die US-A-4 554 258 beschreibt Fritten, die $Bi_2O_3$, $B_2O_3$, $SiO_2$, und Alkalimetalloxide enthalten, wobei letztere in bestimmten Konzentrationen vorhanden sein müssen, und die US-A-4 590 171 solche, die $Li_2O$, $Na_2O$, BaO, $B_2O_3$, $Al_2O_3$, $SiO_2$, $ZrO_2$ und Fluor enthalten. Obwohl gemäss diesen Publikationen die jeweiligen Frittenzusammensetzungen verschiedene erwünschte Eigenschaften besitzen, vermögen sie dem einen oder anderen Erfordernis nicht immer zu genügen.

Es ist nun gefunden worden, dass Glasfrittenzusammensetzungen, die $Na_2O$, ZnO, $B_2O_3$ und $SiO_2$ in bestimmtem Verhältnis enthalten, überraschenderweise eine ungewöhnliche Kombination wünschenswerter Eigenschaften besitzen. Sie genügen dem Grunderfordernis, dass sie zur Herstellung con Glasuren und Emails, ohne Zusatz von Blei und Cadmiumkomponenten, geeignet sind. Zusätzlich besitzen sie niedrige Erweichungspunkte, eine ausreichend geringe Wärmeausdehnung zur Vermeidung von Rissbildungen beim Auftragen auf Natronkalk-Quarzglas, sowie eine geringe Wasserlöslichkeit, die ihre Verwendung in Spritzmitteln auf Wasserbasis erleichtert. Von besonderer Bedeutung ist aber die hervorragende Säurebeständigkeit, insbesondere gegen säurehaltigen Flüssigkeiten, wie z.B. Frucht- und Gemüsesäfte. Diese Glasfrittenzusammensetzungen eignen sich deshalb sehr gut für Glasur- und Emailüberzüge von Glas-, Keramik- und Porzellanwaren verschiedenster Art. Sie können auch in verschiedenen Druckverfahren eingesetzt werden.

Die vorliegende Erfindung betrifft demnach eine blei- und cadmiumfreie Glasfrittenzusammensetzung, die aus den nachstehend aufgeführten Komponenten in den angegebenen Mol %-Mengen besteht:

5,0 - 14,0 Mol % $Na_2O$

13,7 - 25,0 Mol % ZnO

6,0 - 13,0 Mol % $B_2O_3$

45,0 - 60,0 Mol % $SiO_2$

0 - 5,0 Mol % $Li_2O$

0 - 10,0 Mol % $Bi_2O_3$

2,9 - 7,0 Mol % $TiO_2$

Es muss insbesondere festgehalten werden, dass Ueberzüge, die eine grössere Menge an $B_2O_3$ und weniger $SiO_2$ enthalten, den gegenwärtigen minimalen Erfordernissen bezüglich Säurebeständigkeit nicht genügen.

Der Zusatz des einen oder anderen fakultativen Oxids erweist sich je nach Verwendungszweck der Glasfrittenzusammensetzung als vorteilhaft. $Li_2O$ kann gegebenenfalls als Ersatz für einen Teil des $Na_2O$-Anteiles verwendet werden, wobei es einerseits eine Erniedrigung der Einbrenntemperatur bewirkt, andererseits aber Ursache gewisser Wärmespannungen sein kann.

Von ganz besonderm Interesse sind die erfindungsgemässen Glasfritten der folgenden Zusammensetzungen

a)

12,1 Mol % $Na_2O$

18,2 Mol % ZnO

12,2 Mol % $B_2O_3$

54,5 Mol % $SiO_2$

3,0 Mol % $TiO_2$

b)

11,4 Mol % $Na_2O$

17,2 Mol % ZnO

11,4 Mol % $B_2O_3$

51,4 Mol % $SiO_2$

2,9 Mol % $TiO_2$

5,7 Mol % $Bi_2O_3$

c)

12,1 Mol % $Na_2O$

13,7 Mol % ZnO

12,1 Mol % $B_2O_3$

54,6 Mol % $SiO_2$

3,0 Mol % $TiO_2$

4,5 Mol % $Li_2O$

Die Glasfritten werden durch Vermischen der dem Fachmann wohlbekannten oxidbildenden Substanzen, Verschmelzen des erhaltenen Gemisches im Glasschmelzofen bei 1000 - 1200°C zu geschmolzenem Glas und Abschrecken des letzteren durch Eintauchen in Wasser oder Durchleiten in einem wassergekühlten Walzenstuhl hergestellt. Wenn nötig, kann die Fritte durch übliche Mahlmethoden zu Pulver gemahlen werden. Die erhaltenen Produkte haben im allgemeinen Erweichungspunkte zwischen 450 und 600°C und Wärmeausdehnungskoeffiziente zwischen 70 und 90 x $10^{-7}$/° C.

Die Glasfrittenzusammensetzungen der vorliegenden Erfindung eignen sich insbesondere zur herstellung von Dekorüberzugsmassen für Glaswaren, sie können aber auch für den Ueberzug von Keramikware eingesetzt werden. Um diese Produkte beispielsweise zur Dekoration von Glaswaren zu verwenden, wird mit einer erfindungsgemässen Fritte, Titandioxid und einem Alkohol/Wasser-Gemisch eine Dekorüberzugsmasse hergestellt. Diese wird aussen auf einem Glaskrug oder einer Glühbirne aufgetragen (z.B. durch Spritzen) und dann während 3 Minuten bei 680°C eingebrannt. Man erhält einen glatten, glasigen Ueberzug mit guter Beständigkeit gegen den Einfluss verschiedener sauren und alkalischen Substanzen. Farbstoffe und Pigmente können zur Herstellung gefärbter Glasuren oder Emails in den erfindungsgemässen Fritten gelöst und/oder suspendiert werden.

Die nachfolgenden Beispiele dienen zur Erläuterung der Erfindung. In diesen Beispielen werden die rohen Glassatzzusammensetzungen nach allgemein bekannten Methoden vermischt, geschmolzen, im allgemeinen bei etwa 1200°C ca. 45 Minuten gebrannt und anschliessend abgeschreckt, um die Glasfrittenzusammensetzung zu erzeugen.

Die Produkte werden wie folgt geprüft: 4,0 g Glasfritte werden mit 1,0 g eines Trägers auf Fichtenöl-Basis vermischt. Die erhaltene Dispersion wird mittels Siebdruck mit einer Nassschichtdicke von etwa 50 µm (2 mils) auf Glasplättchen aufgetragen. Letztere werden zur Bestimmung der "Glasur-Temperatur", d.h. der niedrigst möglichen Temperatur, bei der das Glaspulver genügend fliessen kann, um einen glatten, durchsichtigen Ueberzug zu bilden, bei verschiedenen Temperaturen gebrannt.

Die Säurebeständigkeit wird einerseits gemäss der Standardmethode ASTM C 724-81 und zweitens durch Eintauchen der beschichteten Glasplättchen in 4 %ige Essigsäure während 24 Stunden bestimmt. Ueberzüge, die gemäss der ersten Bestimmungsmethode unter "A" eingestuft sind und solche, die im zweiten Versuch nicht oder nur geringfügig geätzt sind, als säurebeständig zu betrachten.

Typische erfindungsgemässe Frittenzusammensetzungen und die entsprechenden gemäss den oben beschriebenen Testmethoden bestimmten Gebrauchseigenschaften sind in der nachfolgenden Tabelle aufgeführt.

| Oxid-Komponenten | Frittenzusammen-setzungen (Mol %) | | |
|---|---|---|---|
| | Bsp. 1 | Bsp. 2 | Bsp. 3 |
| $Na_2O$ | 12,1 | 11,4 | 12,1 |
| ZnO | 18,2 | 17,2 | 13,7 |
| $B_2O_3$ | 12,2 | 11,4 | 12,1 |
| $SiO_2$ | 54,5 | 51,4 | 54,6 |
| $TiO_2$ | 3,0 | 2,9 | 3,0 |
| $Li_2O$ | – | – | 4,5 |
| $Bi_2O_3$ | – | 5,7 | – |
| Glasur-Temperatur (°C) | 650 | 607 | 621 |
| Säurebest. Stufe (ASTM) | A | A | A |
| 4 % Essigsäure | nicht geätzt | nicht geätzt | nicht geätzt |

Anhand dieser Resultate werden die ausgezeichneten Eigenschaften, insbesondere die hervorragende Säurebeständigkeit der erfindungsgemässen Glasfrittenzusammensetzungen nachgewiesen.

Eine ähnliche Glasfrittenzusammensetzung mit vergleichbaren Gebrauchseigenschaften erhält man bei der Verwendung von 13,1 Mol % $Na_2O$, 19,7 Mol % ZnO, 8,2 Mol % $B_2O_3$ und 59,0 Mol % $SiO_2$.

**Patentansprüche**

1.  Blei- und cadmiumfreie Glasfrittenzusammensetzung, bestehend aus
    5,0 - 14,0 Mol % $Na_2O$
    13,7 - 25,0 Mol % ZnO
    6,0 - 13,0 Mol % $B_2O_3$
    45,0 - 60,0 Mol % $SiO_2$
    0 - 5,0 Mol % $Li_2O$
    0 - 10,0 Mol % $Bi_2O_3$
    2,9 - 7,0 Mol % $TiO_2$

2.  Glasfrittenzusammensetzung gemäss Anspruch 1, bestehend aus
    12,1 Mol % $Na_2O$
    18,2 Mol % ZnO
    12,2 Mol % $B_2O_3$
    54,5 Mol % $SiO_2$
    3,0 Mol % $TiO_2$

3.  Glasfrittenzusammensetzung gemäss Anspruch 1, bestehend aus
    11,4 Mol % $Na_2O$
    17,2 Mol % ZnO
    11,4 Mol % $B_2O_3$
    51,4 Mol % $SiO_2$
    2,9 Mol % $TiO_2$
    5,7 Mol % $Bi_2O_3$

4.  Glasfrittenzusammensetzung gemäss Anspruch 1, bestehend aus
    12,1 Mol % $Na_2O$
    13,7 Mol % ZnO
    12,1 Mol % $B_2O_3$

4

54,6 Mol % $SiO_2$
3,0 Mol % $TiO_2$
4,5 Mol % $Li_2O$

**Claims**

1. Lead-free and cadmium-free glass frit composition consisting of
5.0 - 14.0 mol % $Na_2O$
13.7 - 25.0 mol % $ZnO$
6.0 - 13.0 mol % $B_2O_3$
45.0 - 60.0 mol % $SiO_2$
0 - 5.0 mol % $Li_2O$
0 - 10.0 mol % $Bi_2O_3$
2.9 - 7.0 mol % $TiO_2$

2. A glass frit composition according to claim 1 consisting of
12.1 mol % $Na_2O$
18.2 mol % $ZnO$
12.2 mol % $B_2O_3$
54.5 mol % $SiO_2$
3.0 mol % $TiO_2$

3. A glass frit composition according to claim 1 consisting of
11.4 mol % $Na_2O$
17.2 mol % $ZnO$
11.4 mol % $B_2O_3$
51.4 mol % $SiO_2$
2.9 mol % $TiO_2$
5.7 mol % $Bi_2O_3$

4. A glass frit composition according to claim 1 consisting of
12.1 mol % $Na_2O$
13.7 mol % $ZnO$
12.1 mol % $B_2O_3$
54.6 mol % $SiO_2$
3.0 mol % $TiO_2$
4.5 mol % $Li_2O$

**Revendications**

1. Composition de fritte de verre sans plomb ni cadmium, essentiellement formée de :
5,0 - 14,0 Mol % $Na_2O$
13,7 - 25,0 Mol % $ZnO$
6,0 - 13,0 Mol % $B_2O_3$
45,0 - 60,0 Mol % $SiO_2$
0 - 5,0 Mol % $Li_2O$
0 - 10,0 Mol % $Bi_2O_3$
2,9 - 7,0 Mol % $TiO_2$

2. Composition de fritte de verre selon la revendication 1, essentiellement formée de :
12,1 Mol % $Na_2O$
18,2 Mol % $ZnO$
12,2 Mol % $B_2O_3$
54,5 Mol % $SiO_2$
3,0 Mol % $TiO_2$

3.  Composition de fritte de verre selon la revendication 1, essentiellement formée de :
    11,4 Mol % $Na_2O$
    17,2 Mol % $ZnO$
    11,4 Mol % $B_2O_3$
    51,4 Mol % $SiO_2$
    2,9 Mol % $TiO_2$
    5,7 Mol % $Bi_2O_3$

4.  Composition de fritte de verre selon la revendication 1, essentiellement formée de :
    12,1 Mol % $Na_2O$
    13,7 Mol % $ZnO$
    12,1 Mol % $B_2O_3$
    54,6 Mol % $SiO_2$
    3,0 Mol % $TiO_2$
    4,5 Mol % $Li_2O$